## Europäisches Patentamt

## European Patent Office

## Office européen des brevets

(19)

(11) Veröffentlichungsnummer: **0 062 144**
**B1**

(12)

# EUROPÄISCHE PATENTSCHRIFT

(45) Veröffentlichungstag der Patentschrift:
06.04.88

(21) Anmeldenummer: 82100873.7

(22) Anmeldetag: 06.02.82

(51) Int. Cl.⁴: **B 29 C 49/10**

(54) Verfahren und Vorrichtung zur Ausformung molekular orientierter thermoplastischer Hohlkörper.

(30) Priorität: 31.03.81 US 249723

(43) Veröffentlichungstag der Anmeldung:
13.10.82 Patentblatt 82/41

(45) Bekanntmachung des Hinweises auf die Patenterteilung:
06.04.88 Patentblatt 88/14

(84) Benannte Vertragsstaaten:
DE FR GB IT

(56) Entgegenhaltungen:
FR-A-2 249 760
GB-A-2 016 360
US-A-3 311 950
US-A-3 314 106
US-A-3 651 186
US-A-3 806 300
US-A-4 065 535
US-A-4 108 937
US-A-4 116 607
US-E-29 065

(73) Patentinhaber: BEKUM Maschinenfabriken GmbH,
Lankwitzerstrasse 14/15, D-1000 Berlin 42 (DE)

(72) Erfinder: Mehnert, Gottfried, Messelstrasse 25,
D-1000 Berlin (DE)
Erfinder: Roos, Uwe, Hasenheide 12, D-3123
Bodenteich (DE)
Erfinder: Younkin, Harry Allen, 800 Greenbank
Road, Wilmington, Del. 19808 (US)

(74) Vertreter: Huss, Carl- Hans, Dipl.- Ing.,
Patentanwalt Griesstrasse 3 a Postfach 14 54,
D-8100 Garmisch- Partenkirchen (DE)

EP 0 062 144 B1

## Beschreibung

Die Erfindung bezieht sich auf ein Verfahren zur Blasformung eines fertigen, hohlen, biaxial orientierten Behälters aus einem rohrförmigen Rohling gemäß dem Oberbegriff des Patentanspruchs 1 sowie auf eine Vorrichtung zur Durchführung des Verfahrens gemäß dem Oberbegriff des Patentanspruchs 7.

Es ist in der Technik bekannt, daß das biaxiale Blasformen hohler Behälter, wie Flaschen aus Kunststoffen, Gegenstände mit verbesserten physikalischen Eigenschaften wie Festigkeit und Transparenz zur Folge hat. Im allgemeinen wird bei dieser Blasformtechnik ein gekühlter rohrförmiger Vorformling oder Rohling auf eine geeignete Orientierungstemperatur erhitzt, entlang seiner Längsrichtung gereckt, um das Material axial zu orientieren, und dann innerhalb einer Formhöhlung geblasen.

Bei der Blasformung hohler Behälter ist ein besonders schwieriges Problem die Herstellung großer Behälter mit normalgroßen Hals- und Gewindebereichen. In diesen Fällen ist der Materialquerschnitt am Hals größer als beim übrigen geblasenen Behälter. Wenn demnach ein kleiner Rohling verwendet wird, um einen Hals- und Gewindebereich mit kleinem Durchmesser zu ergeben, werden die Wände des übrigen Rohlings unverhältnismäßig dünn durch die Dehnung während des Blasvorgangs und beeinflussen die Festigkeit des Behälters ungünstig. Wenn andererseits ein Rohling verwendet wird, der genügend Material für die Ausformung der Wände eines verhältnismäßig großen Behälters aufweist, dann ist der Durchmesser des Hals- und Gewindebereiches zu groß mit dem Ergebnis, daß bei der Ausformung des Behälters zusätzliches Material unnütz verbraucht wird und möglicherweise beim Schließen der Form Abfall entsteht, der eine zusätzliche Bearbeitung bei der Fertigstellung des Behälters erfordert und auf diese Weise die Produktionskosten erhöht.

Gewisse physikalische Eigenschaften eines aus biaxial orientiertem Material geformten Behälters, wie Festigkeit und Transparenz, sind abhängig vom axialen Reckgrad, der bei einer vorgegebenen Rohlinggröße möglich ist. Der axiale Reckgrad ergibt sich aus der ungereckten Länge des Rohlings und der Länge nach der Reckung. Diese Längen ergeben sich aus der gewünschten Behältergröße und seinem Gewicht, welche in Verbindung mit der Notwendigkeit einen normalgroßen Hals- und Gewindeteil vorzusehen, die Rohlingsgröße definieren. Es ist also ein Stand der Technik zur Blasformung biaxial orientierter Behälter bekannt, bei dem die erreichbaren axialen Reckgrade begrenzt sind und die Maximalgröße der ausformbaren Behälter eingeschränkt ist.

Biaxial orientierte Behälter wurden hergestellt unter Einklemmung eines Teiles des Rohlings innerhalb der Halsformhöhlungen vor dem Recken des Rohlings. Es sind auch Techniken bekannt, wo Vorkörper mit in einer ersten Vorkörperperformungsstufe ausgeformten fertigen Halsteilen darauffolgend gereckt und blasgeformt wurden. Die sich daraus ergebenden Behälter weisen im Hauptteil orientiertes Material auf, während der fertige Hals nicht aus orientiertem Material besteht. Dem Halsbereich fehlt daher die Klarheit und Festigkeit, die bei einem Behälter, der aus wenigstens axial orientiertem Material besteht, teilweise erreicht werden kann. Um dieses Problem zu überwinden, wurden Verfahren entwickelt, die eine Orientierung des Materials im Halsbereich vorsehen. Beispiele solcher Verfahren sind in den US-Patenten 3 651 186 (J.N. Hall) 4 065 535 und 4 116 607 (R.W. LeGrand) beschrieben. Die US-Patente 4 065 535 und 4 116 607 beschreiben ein Verfahren mit den Merkmalen des Oberbegriffs des Patentanspruchs 1, während die letztgenannte Druckschrift eine Vorrichtung mit den Merkmalen des Oberbegriffs des Patentanspruchs 7 offenbart.

Gemäß dem US-Patent 4 108 937 (Martineu et al.) wird ein zylindrischer Vorkörper vor der Blasformung des Behälters gereckt, was eine Orientierung des Materials im Halsbereich zur Folge hat, und das Material in diesem Bereich wird auf eine höhere Temperatur erhitzt, um eine größere Deformierung zu ermöglichen. Anders als in dem später erläuterten LeGrand-Verfahren sieht jedoch das Martineu et al.-Verfahren nicht die Ausbildung von Verschlußeinrichtung auf der Halsoberfläche, wie z. B. Gewinde vor, noch ist eine präzise Kalibrierung des Innendurchmessers der Halsöffnung gegeben. Vielmehr wird bei Martineu et al. der ausgeformte Behälter entnommen, und es ist ein getrennter Arbeitsgang erforderlich, um den oberen Teil des Behälters zur Erzielung der endgültigen Form des fertigen Behälters abzuschneiden.

In den LeGrand-Patenten wird eine Technik aufgezeigt für das Recken des Rohlings und die Ausformung des Behälterhalses, wobei orientiertes Material mittels einer Stauchhülse in den Gewindeteil der Form gepresst wird. Der äußere Durchmesser der Stauchhülse hat annähernd die gleiche Größe wie der Außendurchmesser des fertigen Halses am Gewindegrund und der äußere Durchmesser des Blasdornes legt den Durchmesser der Öffnung im fertigen Hals fest. Nachdem der Rohling auf die Stauchhülse passen muß, ist der Innendurchmesser des Rohlings entsprechend festgelegt. Diese Größenbeschränkung und das Erfordernis eines normalgroßen Halses legt das Verhältnis zwischen Innen- und Außendurchmesser des Rohlings fest. Die Halsgröße ist ein kritischer Faktor, weil der Außendurchmesser des Rohlings im Halsbereich des Behälters nach dem Recken in die Öffnung des Halseinsatzes der Form passen muß, um Abfallbildung zu vermeiden. Mit den auf diese Weise begrenzten Durchmessern des Rohlings und den die Länge des Rohlings bestimmenden sich aus der gewünschten Behältergröße und seinem Gewicht ergebenden Parametern ist auch der Reckgrad vorgegeben, der bei einer gegebenen Größe des Behälters, des Dornes und der Halsformeinsätze möglich ist. Diese Technik begrenzt daher die Flexibilität bei der Wahl des axialen Reckgrades.

Ein mit dem bekannten Stand der Technik der Ausformung von Behältern aus biaxial orientiertem Material mit nachbearbeitungsfreien Hälsen zusammenhängendes Problem ist die Bereitstellung einer entsprechenden Menge des orientierten Materials, um Verschlußhalterungen, wie Gewinde, auszuformen. So kann bei der in den genannten LeGrand-Patenten offenbarten Technik, wobei der Rohling axial auf einen Kalibrierblasdorn gereckt und die Form zur Dimensionierung des Außendurchmessers des Behälterhalses geschlossen wird, zu wenig axial orientiertes Material unterhalb der Stauchhülse zur Verfügung stehen, um alle Gewindegänge voll auszubilden. Nur den Vorschubweg der Stauchhülse zu vergrößern, um die vor der Stauchhüse befindliche Materialmenge zu vergrößern, ist keine voll befriedigende Lösung, weil die Stauchhülse dann eine größere Menge axial orientierten Materials durchdringen muß, was die Möglichkeit mit der Stauchhüse eine glatte, sauber abgetrennte Halsstirnfläche auszuformen, nachteilig beeinflußen kann. Eine übermäßige Materialmenge unterhalb der Stauchhülse kann auch die Verteilung des Materials auf die Länge des Behälterhalses ungünstig beeinflußen, so daß die Gewindegänge und das untere Ende des Halses ungenügend ausgeformt werden.

Der vorliegenden Erfindung liegt die Aufgabe zugrunde, ein Verfahren und eine Vorrichtung der betrachteten Art so weiter zu entwickeln, daß eine größere Flexibilität in der Auswahl des axialen Reckgrades des rohrförmigen Rohlings, aus dem der Behälter geformt wird, erreichbar ist, wodurch eine weitergehende Beeinflußung der Eigenschaften des geblasenen Behälters ermöglicht ist.

Diese Aufgabe wird erfindungsgemäß durch die im Kennzeichen der Patentansprüche 1 und 7 angegebenen Merkmale gelöst. Vorteilhafte Weiterbildungen der Erfindung sind in den Unteransprüchen gekennzeichnet.

Die erfindungsgemäße Vorrichtung hat einen Blasdorn mit zwei unterschiedlichen Durchmessern, mit einem Kalibrierteil größeren Durchmessers entsprechend dem Innendurchmesser der fertigen Halsöffnung und einem kleineren Durchmesserteil am vorderen Ende. Eine Stauchhülse umgibt den Blasdorn hin- und herbeweglich, und eine Halsklammer ist so angeordnet, daß sie sich um den Blasdorn schließen kann. Ein erhitzter rohrförmiger Rohling wird über den Teil des Blasdornes mit größerem Durchmesser geführt und auf ihm durch die Halsklammer festgeklemmt. Der Rohling wird gereckt, wodurch er sich zusammenzieht und mit verringerter Wandstärke an den Blasdornteil geringeren Durchmessers anlegt, wodurch eine Materialmenge für die Ausformung des Behälterhalses festgelegt wird und sich am Ende des Dornes eine noch geringere Wandstärke ergibt. Die Form wird geschlossen, der Rohling geblasen, der Blasdorn in Längsrichtung eingeschoben, um die innere Halsöffnung zu kalibrieren bzw. zu dimensionieren, und die Stauchhülse wird vorgeschoben, um zusätzliches orientiertes Material für die Fertigformung des Halses einzubringen, und um zur Ausbildung einer fertigen Halsöffnung Abfallmaterial abzutrennen. Der Halsbereich der Form ist in dem Bereich, in dem der Halsabfall abgetrennt wird, so geformt, daß eine vorbestimmte Materialmenge bereitgestellt und zur Ausformung des Halses gestaucht wird.

Die vorstehenden Erläuterungen werden verständlicher durch die folgende Beschreibung einer gegenwärtig bevorzugten, jedoch nichts desto weniger beispielshaften Ausführungsform der erfindungsgemäß Vorrichtung, die in den Zeichnungen dargestellt ist. Dabei zeigen:

Fig. 1 einen Querschnitt eines Teiles einer Vorrichtung gemäß der vorliegenden Erfindung;

Fig. 2 eine der Fig. 1 entsprechende Ansicht, wobei der Rohling in Längsrichtung gereckt und die Form um ihn geschlossen wurde;

Fig. 3 eine Ansicht gemäß der Fig. 2, wobei der Blasdorn in Längsrichtung eingeführt wurde, um die Halsöffnung zu kalibrieren;

Fig. 4 eine Ansicht gemäß der Fig. 3, wobei die Stauchhülse in Längsrichtung eingeführt wurde;

Fig. 5 und 6 Ansichten gemäß der Fig. 4, verschiedene Stadien des Öffnens der Formteile und des Zurückziehens des Blasdorns und der Stauchhülse darstellend, und

Fig. 7 eine Ansicht gemäß der Fig. 4, wobei der Blasdorn und die Stauchhülse vollkommen zurückgezogen sind und der Behälter entfernt wird.

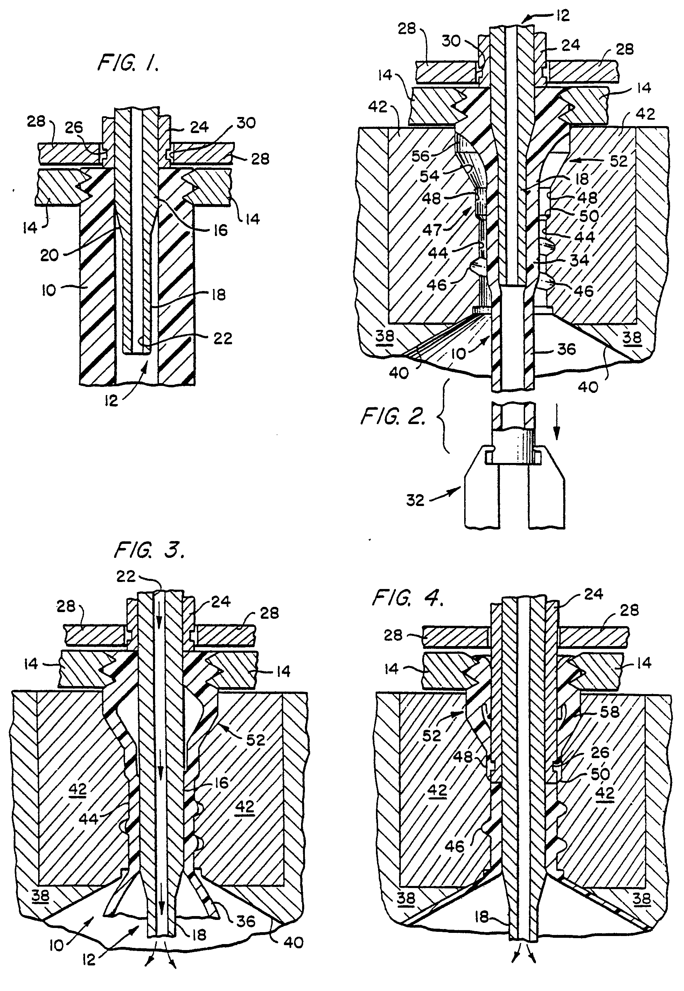

Unter Bezugnahme auf Fig. 1 der Zeichnung ist das Endteil eines rohrförmigen Vorformlings oder Rohlings 10 über ein Blasrohr oder einen allgemein mit 12 bezeichneten Dorn geschoben und mittels der Backen einer Halsklammer 14 festgehalten. Der Rohling 10, ein abgelängtes Rohrstück orientierbaren Materials, wurde vorher auf einegeeignete Orientierungstemperatur erhitzt. Der Blasdorn 12 hat einen Teil 16 größeren Durchmessers, der mit einem Teil 18 kleineren Durchmessers durch ein konisches Zwischenteil 20 verbunden ist. Entlang der Längsachse des Blasdornes 12 erstreckt sich ein zentraler Durchlaß oder eine Leitung 22, durch die ein unter Druck stehendes Medium in herkömmlicher Weise geleitet wird, um einen Behälter in bekannter Weise innerhalb einer Formhöhlung blaszuformen. Der Blasdorn 12 ist mit einem bekannten Mechanismus (nicht dargestellt) verbunden, der den Blasdorn entlang seiner Längsachse auf- und abbewegt.

Eine rohrförmige Stauchhülse 24 umgibt einen oberen Teil des Blasdornes 12 koaxial und berührt, wie dargestellt, die obere Endfläche des Rohlings 70. Anschließend an das freie Ende der Stauchhülse 24 ist eine umlaufende Vertiefung oder Ringnut 26 vorhanden, deren Zweck später näher beschrieben wird. Die Stauchhülse ist mit einer bekannten Betätigungsvorrichtung (nicht dargestellt) verbunden, welche die Hülse auf den Blasdorn 12 und unabhängig von diesem auf- und abbewegt.

Oberhalb der oberen Fläche der Halsklammer 14 und der oberen Endfläche des Rohlings 10 ist eine Abstreifplatte 28 angeordnet mit einer Öffnung 30, durch die der Blasdorn 12 und die Stauchhülse 24 frei hindurchgehen. Die Abstreifplatte 28 ist stationär befestigt, um die Entfernung des oberen Abfallmaterials von der Stauchhülse 24 zu unterstützen, wie später näher beschrieben wird.

Bezugnehmend nun auf Fig. 2 der Zeichnung wurde das untere Endteil des Rohlings 10 von einer Klammer 32 ergriffen und in Längsrichtung gereckt, wodurch das Rohlingsmaterial axial orientiert wird. Beispielsweise kann die Klammer 32 vorteilhaft auch verwendet werden, um den Rohling über den Blasdorn 12 zu führen und während ihrer Zurückziehung das Recken des Rohlings bewirken. Eine derartige Technik ist in der europäischen Patentanmeldung, Aktenzeichen 80102706.1 vom 16. Mai 1980 des gleichen Anmelders beschrieben. Während des Reckens zieht sich der Rohling im Halsbereich 34 des Behälters zusammen, unter Reduzierung auf eine erste Wandstärke, wenn seine Innenfläche sich an die Oberfläche des Bereiches 18 kleineren Durchmessers des Blasdornes 12 anlegt. Diese erste Wandstärke stellt das für die Ausbildung des fertigen Behälterhalses erforderliche Material zur Verfügung. Der Vorgang des Zusammenziehens des Rohlings setzt sich fort unterhalb des Endes des Blasdornes 12 bis zu einer zweiten dünneren Wandstärke 36, aus welcher der Behälterhauptteil blasgeformt wird. Formteile 38 einer teilbaren Form wurden mittels bekannter nicht dargestellter Einrichtungen um den gereckten Rohling geschlossen. Jedes Formteil 38 hat eine Formhöhlung 40, welche die Form des geblasenen Behälters definiert und einen Halseinsatz 42 oberhalb der Formhöhlung. Der Halseinsatz 42 weist eine zylindrische Fläche 44 mit einer Anzahl halbkreisförmiger konkaver Vertiefungen 46 auf. Die zylindrische Fläche 44 bildet die Außenfläche des fertigen Behälterhalses und die Vertiefungen 46 die Gewindegänge an der Außenfläche des Halses. Wenn auch die Vertiefungen für Gewinde dargestellt sind, so können natürlich auch andere Vorsprünge für die Anbringung eines Behälterverschlußes, wie Nasen und dgl. ausgeformt werden. Der äußere Durchmesser des Teiles 16 des Blasdornes ist im wesentlichen der gleiche wie der Innendurchmesser der fertigen Behälterhalsöffnung, und der Außendurchmesser der Stauchhülse 24 ist im wesentlichen der gleiche wie der Außendurchmesser des fertigen Behälterhalses am Grund des Gewindes oder der entsprechenden Verschlußteile. Der Durchmesser des Blasdornteils 18 ist so bemessen, daß, wenn der Rohling 10 gereckt wird, die Dicke des gereckten Materials in diesem Bereich eine vorbestimmte oder vorgegebene Menge axial orientierten Materials ergibt, die bei der Ausformung des fertigen Behälterhalses verwendet wird. Durch entsprechende Bemessung des Durchmessers des Blasdornteils 18 kann die erforderliche Materialmenge vorbestimmt werden, die zur Verfügung steht, wenn der Rohling 10 zur Anlage an den Halseinsätzen 42 geblasen wird, um die gewünschten Innen- und Außendurchmesser des Behälterhalses zu erhalten. Anschließend wird das durch die Stauchhülse 24 geförderte orientierte Material nur für die Ausformung der Verschlußgewinde benötigt, wie später näher beschrieben.

Oberhalb der Vertiefungen 46 zur Gewindeausformung im Bereich des fertigen offenen Endes des Behälterhalses sind die Halseinsätze 42 mit einem erweiterten Teil oder einem Speicherraum 47 versehen, der beispielsweise durch eine Zylinderwand 48 begrenzt ist, die an ihrem unteren Ende durch eine Schrägfläche 50 mit der zylindrischen Fläche 44 des Halsensatzes 42 verbunden ist. Die Zylinderwand 48 hat einen größeren Durchmesser als die zylindrische Fläche 44, und die verbindende Schrägfläche 50 kann unter jedem geeigneten Winkel beispielsweise um 30 Grad zur Vertikalen geneigt sein. Die Schrägfläche 50 kann aus entsprechendem gehärtetem Material bestehen und mit der Stauchhülse 24 zusammenwirken, um Abfallmaterial im Halsbereich abzutrennen und das offene Ende des Behälters fertigzuformen. Das sich durch den Speicherraum 47 ergebende Volumen sorgt für eine vorbestimmte Menge axial orientierten Materials, das durch die Stauchhülse 24 in die Halseinsätze 42 gestaucht werden kann, um wohlausgebildete Gewindegänge auf dem Behälterhals auszuformen, wie später näher beschrieben.

Die vorstehende Ausgestaltung des Speicherraums 47 mit einer Zylinderwand und einer unteren Schrägfläche ist nur beispielhaft. Andere geeignete Formen der Seiten- und Unterfläche können verwendet werden, solange der Speicherraum eine kontrollierbare Menge axial orientierbaren Materials bereitstellt, das zum Hineinpressen in die Halseinsätze mittels der Stauchhülse zur Verfügung steht.

Wie in Fig. 2 gezeigt, ist im oberen Teil jedes Halseinsatzes 42 ein weiterer erweiterter Teil 52 von etwa kegelstumpfförmiger Gestalt vorgesehen, der z. B. eine konische Fläche 54 haben kann oberhalb der Zylinderwand 48 und in eine gerade zylindrische Zone 56 übergehend. Der erweiterte Teil 52 bildet einen Aufnahmeraum im Einsatz 42 für das durch die Bewegung des Blasdorns 12 und der Stauchhülse 24 verdrängte Material, wodurch das Material aus dem Bewegungsbereich entfernt und ein leichterer Durchgang des Blasdorns und der Stauchhülse bewirkt wird. Außerdem bildet der erweiterte Teil 52, nachdem die Formteile 38 geschlossen wurden und die Halsklammern 14 den Rohling 10 freigegeben haben, Raum für die Aufnahme des oberen Teils des Rohlings, der durch die Bewegung der Stauchhülse 24 dort hineingeschoben wird.

Die Funktionsweise der Blasformvorrichtung kann unter Bezugnahme auf die Zeichnungen erläutert werden. Der Rohling 10 wird auf den Teil 16 größeren Durchmessers des Blasdornes 12 durch Einrichtungen, wie z.b. die Klammer 32, welche das untere Endteil des Rohlings ergriffen hat (Fig. 1 und 2), aufgeschoben. Der konische Übergangsteil 20 des Blasdornes 12 dient dazu, den Rohling auf den Blasdorn zu führen und zu zentrieren und das Ende der Stauchhülse 24 als Anschlag, um den Rohling 10 in die richtige Position bezüglich der Halsklammern 14 zu bringen.

Die Halsklammern 14 werden dann um den Rohling 10 geschlossen und halten den Rohling fest auf den Blasdorn 12 und die Klammer 32 reckt, während sie aus der Form zurückgezogen wird, den Rohling in Längsrichtung in der aus Fig. 2 ersichtlichen Form.

Nach dem Längsrecken des Rohlings, oder gleichzeitig damit, werden die Formteile 38 um den Rohling geschlossen. Wie aus Fig. 2 ersichtlich, ist der Teil 18 kleineren Durchmessers des Blasdornes 12 so bemessen, daß der gereckte Rohling, nachdem er sich auf diesen Teil des Blasdornes zusammengezogen hat, einen Außendurchmesser aufweist, der geringer ist, als der endgültige Außendurchmesser des fertigen Behälterhalses, der sich aus der zylindrischen Fläche 44 der Halseinsätze 42 ergibt. Dies ergibt einen Raum um den Rohling herum, der die Bildung von Abfall beim Schließen der Formteile verhindert.

Wie aus Fig. 3 ersichtlich wird, nachdem der Rohling in Längsrichtung gereckt und die Form geschlossen wurde, unter Druck stehendes Medium durch die zentrale Leitung 22 eingeführt, presst den Rohling gegen die Halseinsätze 42 und bewirkt, daß der untere Teil 36 des gereckten Rohlings anfängt, die Gestalt der Formhöhlung 40 anzunehmen. Genauer gesagt, wird der Rohling in den erweiterten Teil 52 hinein und gegen die zylindrische Fläche 44 verformt, wodurch er eine birnen- oder blasenförmige Gestalt annimmt.

Der Blasdorn 12 wird in Längsrichtung in den Rohling eingeführt, um den Halsteil des Rohlings in eine der zylindrischen Flächen 44 der Innenfläche der Halseinsätze 42 entsprechende Form zu pressen, und gleichzeitig den inneren Durchmesser der Behälterhalsöffnung zu bemessen und zu kalibrieren. Die Verformung des Rohlings gegen die Halseinsätze 42 durch das Druckmedium ermöglicht ein leichteres Einführen des Blasdorns 12.

Die Stauchhülse 24 wird in Längsrichtung in den Rohling 10 eingeschoben, wobei sie in dem Speicherraum 47 vorhandenes orientiertes Material in die Vertiefungen 46 zur Ausformung der Gewindegänge presst, um saubere Gewindegänge auf der Außenfläche des Behälterhalses zu vollenden (Fig. 4). Wenn die Stauchhülse 24, wie in Fig. 4 gezeigt, ganz eingefahren ist, trifft ihre untere Endfläche auf die Schrägfläche 50 des Speicherraumes 47, wobei sie Überschußmaterial vom Hals abtrennt und eine keine Nacharbeit erfordernde Endfläche an der Halsöffnung schafft. Es ist auch ersichtlich, daß etwas von dem noch verformbaren Rohlingsmaterial im Bereich des unteren Endteils der Stauchhülse 24 in deren Ringnut 26 eindringt wo es haftet bis es schließlich entfernt wird.

Fig. 4 zeigt ein weiteres vorteilhaftes Merkmal des erweiterten Teils 52 in den Einsätzen 42 und der dort durch das Druckmedium ausgeformten Blase aus Rohlingmaterial. Während die Stauchhülse vorgeschoben wird, besteht eine Tendenz für das Rohlingmaterial an der Hülse zu haften und von ihr mitgenommen zu werden. Das Innenvolumen der Blase bildet einen Raum, in welchen dieses Material verdrängt werden kann, wodurch eine Beeinträchtigung der Hülsenbewegung ausgeräumt und eine mögliche nachteilige Auswirkung auf die in den Behälterhals gestauchte Menge axial orientierten Materials vermieden wird.

Obwohl in den Zeichnungen nicht besonders dargestellt, können die Halsklammern 14 nach dem Schließen der Formteile 38 um den gereckten Rohling zurückgezogen werden. Das Zurückziehen der Halsklammern 14 erleichtert den Durchgang des Blasdorns 12 und der Stauchhülse 24 durch den Rohling 10. Wie vorstehend bemerkt, wird die Bewegung des oberen Endteils des Rohlings 10, hervorgerufen durch die Tätigkeit des Blasdorns 12 und der Stauchhülse 24 nach dem Zurückziehen der Halsklammern 14, durch den erweiterten Teil 52 erleichtert, so daß das Rohlingsmaterial den Durchgang der Stauchhülse nicht behindert.

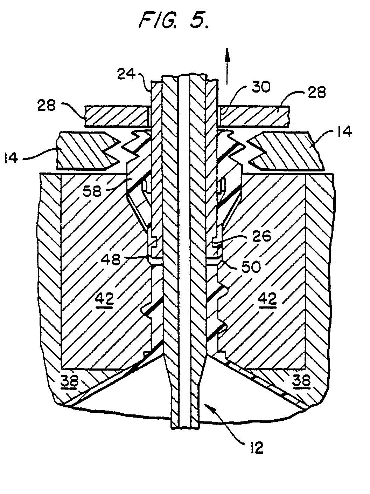

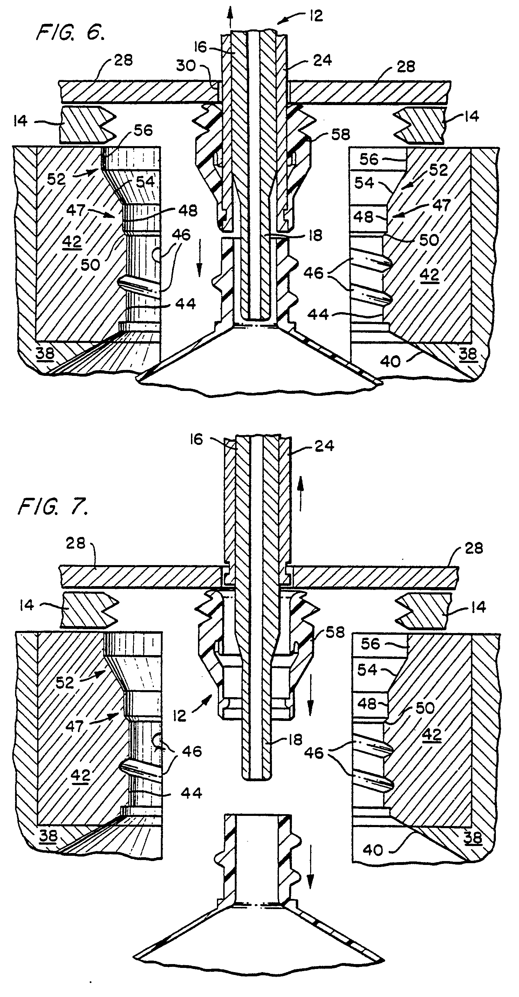

Nachdem der Behälter eine angemessene Zeit geblasen wurde, wird die Stauchhülse 24 zurückgezogen, um das abgetrennte Abfallmaterial 58 vom fertigen Behälter zu entfernen, die Formteile 38 werden geöffnet und der Blasdorn 12 wird zurückgezogen. Wie in den Fig. 5 und 6 dargestellt, hebt die Zurückziehung der Stauchhülse 24 das abgetrennte Abfallmaterial 58 vom Ende des fertig ausgebildeten Halses ab und nach Öffnen der Formteile 38 fällt der Behälter durch die Schwerkraft aus der Form. Während seines Falles wird der fertige Behälter durch den unteren Teil 18 mit kleinerem Durchmesser vom Blasdorn 12 geführt.

Das Halsabfallmaterial 58; das in der Ringnut 26 der Stauchhülse 24 haftet, kann dann ohne weiteres durch Zurückziehen der Stauchhülse durch die Öffnung 30 in der Abstreifplatte 28 abgestreift werden.

Es wird vorausgesetzt, daß ein Steuerungssystem oder entsprechende Einrichtungen vorgesehen sind, um die Bewegung der einzelnen Teile und die Folge und Dauer der einzelnen Funktionsschritte der Blasformmaschine in der vorbeschriebenen Weise zu steuern. So werden das Schließen der Halsklammern 14 um den in Stellung gebrachten Rohling 10 das Recken des Rohlings und das Schließen der Formteile 38 entsprechend aufeinander abgestimmt und gesteuert. Entsprechend werden die Schritte der Einführung des Blasdornes 12, des Einlassens des unter Druck befindlichen Mediums durch die Leitung 22 und des Einführens der Stauchhülse 24 bezüglich Folge und Dauer gesteuert.

In dieser Beziehung ist festzustellen, daß wenn auch die Verfahrensfolge wie vorbeschrieben vorsieht, den Blasdorn vor dem Einführen des Druckmediums einzuführen, diese beiden Schritte auch gleichzeitig erfolgen können. Wie vorbeschrieben, ist das Einlassen des Druckmediums unmittelbar vor oder gleichzeitig mit dem Einführen des Blasdornes vorteilhaft, weil der gereckte Rohling dann im Halsbereich des Behälters gedehnt wird und ein leichteres Einführen des Blasdornes ermöglicht.

Es ist wichtig festzustellen, daß die zeitliche Abstimmung zwischen den verschiedenen beschriebenen Funktionsschritten kritisch ist, wegen des Abkühlens des Rohlings in der Formhöhlung. Es liegt daher auch im Rahmen dieser Erfindung, das orientierte Material im Halsbereich vor, während oder nach dem Blasen des Hauptteils zu stauchen, abhängig von der für die Kühlung erforderlichen Verweilzeit des speziellen verwendeten Materials nachdem die Behälterhalsöffnung kalibriert wurde. Es liegt auch im Rahmen dieser Erfindung, die Blasdorntemperatur durch direkte Zuführung von Wärme durch Kühlung oder durch die Verwendung isolierenden Materials für den Blasdorn zu steuern, um das Halsmaterial vor einer Abkühlung während des Reckens des Rohlings und des Schließens der Form zu schützen und damit die Möglichkeit der Stauchhülse Material in die Halseinsätze zu verdrängen, zu fördern.

Die Erfindung ist anwendbar auf die Herstellung irgendwelcher Gegenstände mit biaxialer molekularer Orientierung und einem verhältnismäßig kleinen Hals- oder Gewindebereich im Vergleich mit dem Hauptteil des Gegenstandes. Die Erfindung ist anwendbar auf die Herstellung solcher Gegenstände aus irgendeinem orientierbaren thermoplastischen Kunststoff, wie Polyolefine, Polyvinylchloride, Acrylnitril-Butadien-Styrol-Polymere, Styrol-Butadien-Copolymere, verschiedene Styrol-Polymere und Copolymere, Polyamide, Polyvinylidenchlorid-Polymere und Copolymere und dgl. Bevorzugte Kunststoffe schließen kristalline Polymere wie die Polymere aus wenigstens einem Mono-1-Olefin mit zwei bis acht Kohlenstoffatomen pro Molekül und noch bevorzugter Polymere und Copolymere von Äthylen, Propylen und 1-Buten ein, wobei Polypropylen besonders bevorzugt ist.

Obwohl in den Zeichnungen nicht eigens dargestellt, ist es selbstverständlich, daß alle vorbeschriebenen Teile innerhalb eines vollständigen und funktionsfähigen Systems angeordnet und verbunden sind. Es ist auch selbstverständlich, daß alle Hilfseinrichtungen, wie Antriebseinrichtungen die Verbindungs- und Steuersysteme und Komponenten für die strömenden Medien nicht besonders beschrieben, aber in dieser Technik bekannt sind und in das funktionsfähige System eingeschlossen werden. Selbstverständlich können Veränderungen der spezifischen Konstruktion und Anordnung einer Blasmaschine der vorbeschriebenen Art im Rahmen durchschnittlichen Fachkönnens vorgenommen werden, ohne den Schutzumfang der in den Ansprüchen definierten Erfindung zu verlassen.

**Patentansprüche**

1. Verfahren zur Blasformung eines fertigen hohlen, biaxial orientierten Behälters aus einem rohrförmigen Rohling (10) aus orientierbarem plastischen Material, das auf eine dem Material entsprechende Orientierungstemperatur erhitzt wurde, bei dem ein Endteil des Rohlings (10) durch Klemmeinrichtungen (14) festgeklemmt, darauf der Rohling entlang seiner Längsachse durch Reckeinrichtungen (32) unter axialer Orientierung des Rohlingmaterials und Zusammenziehung des Rohlings bis zur Anlage an einen Blasdorn gereckt wird, worauf in ihrer Formhöhlung (40) dem zu blasenden Hohlkörper entsprechende Formteile (38) geschlossen werden, ein Druckmedium durch den Blasdorn (12) in den gereckten Rohling eingeleitet und eine den Blasdorn (12) umgebende rohrförmige Hülse (24) in Halsformteile (42) der Blasform (38) eingeführt wird, um orientiertes Material in den Zwischenraum zwischen den Halsformteilen (42) und dem Blasdorn (12) zu stauchen,
   dadurch gekennzeichnet,
   daß der Endteil des Rohlings (10) auf einem ersten Teil (16) größeren Durchmessers des Blasdorns (12) festgeklemmt und der Rohling (10) bis zur Anlage an einen zweiten Teil (18) kleineren Durchmessers des Blasdorns (12) gereckt wird, daß der Blasdorn (12) in Längsrichtung in die Halsformteile (42) der Blasform (38) verschoben wird, um die Innenfläche des Behälterhalses zu kalibrieren, und daß in den Halsformteilen (42) in einem sich nach außen an den Teil zur Ausformung des Behälterhalses anschließenden Teil (47) eine vorbestimmte Menge orientierten Materials für das Hineinstauchen in den Halsbereich bereitgehalten wird.

2. Verfahren nach Anspruch 1,
   dadurch gekennzeichnet,
   daß das Verschieben des Blasdornes (12) nach Einführen des Druckmediums und vor dem Einführen der rohrförmigen Hülse (24) erfolgt.

3. Verfahren nach Anspruch 1,

dadurch gekennzeichnet,
daß das Einführen des Druckmittels und das Verschieben des Blasdornes (12) im wesentlichen gleichzeitig erfolgen.

4. Verfahren nach Anspruch 1,
dadurch gekennzeichnet ,
daß das im äußeren Ende der Halsteile (42) befindliche Material vor dem Einführen der rohrförmigen Hülse (24) durch das Blasmedium zur Anlage an einen erweiterten Teil (52) gebracht wird.

5. Verfahren nach Anspruch 1,
dadurch gekennzeichnet,
daß mit dem Stauchen des orientierten Materials in den Zwischenraum zwischen die Halsformteile (42) und den Blasdorn (12) durch die rohrförmige Hülse (24) das Ausformen einer glatten Stirnfläche des Behälterhalses und das Abtrennen von Überschußmaterial verbunden ist.

6. Verfahren nach Anspruch 1,
dadurch gekennzeichnet,
daß die einen Endteil des Rohlings (10) auf dem Teil (16) größeren Durchmessers des Blasdornes (12) festklemmenden Einrichtungen (14) vor dem Einführen der rohrförmigen Hülse (24) senkrecht zur Blasdornachse geöffnet werden.

7. Vorrichtung zur Durchführung des Verfahrens nach einem der Ansprüche 1 bis 6, mit einem Blasdorn (12), der von einer in Richtung der Blasdornachse verschiebbaren rohrförmigen Hülse (24) umgeben ist, Klemmeinrichtungen (14), die oberhalb von Halsteilen (42) von Formteilen (38) und unterhalb der rohrförmigen Hülse (24) in deren zurückgezogener Stellung senkrecht zur Blasformachse verschiebbar angeordnet sind, sowie mit unterhalb der Blasform vorgesehenen, in Achsrichtung des Blasdornes beweglichen Reckeinrichtungen (32),
dadurch gekennzeichnet,
daß der Blasdorn (12) einen Teil (16) größeren Durchmessers und einen zweiten Teil (18) kleineren Durchmessers aufweist und daß sich an den der Ausformung des Flaschenhalses dienenden Teil (44, 46) der Halsteile (42) ein Speicherraum (47) für eine vorbestimmte Menge des für die Ausformung des Hohlkörperhalses benötigten orientierten Materials anschließt.

8. Vorrichtung nach Anspruch 7,
dadurch gekennzeichnet,
daß sich an den Speicherraum (47) ein zweiter erweiterter Teil (52) in den Halsteilen (42) anschließt.

9. Vorrichtung nach Anspruch 7,
dadurch gekennzeichnet,
daß oberhalb der Klemmeinrichtungen (14) die rohrförmige Hülse (24) umgebende Abstreifplatten (28) vorgesehen sind.

**Claims**

1. A method of blow moulding a finished, hollow, biaxially oriented container from a tubular blank (10) made of orientable plastics material, which has been heated to an orientation temperature appropriate for the material, wherein an end portion of the blank (10) is clamped by clamping means (14), whereupon the blank is stretched along its longitudinal axis by stretching means (32) with axial orientation of the blank material and contraction of the blank until it abuts a blow moulding spike, whereupon moulding parts (38) corresponding in their moulding cavity (40) to the hollow body to be blown are closed, a pressure medium is introduced through the blow moulding spike (12) into the stretched blank and a tubular sleeve (24) surrounding the blow moulding spike (12) is inserted into neck moulding parts (42) of the blow mould (38), in order to compress oriented material into the interspace between the neck moulding parts (42) and the blow moulding spike (12), characterised in that the end part of the blank (10) is clamped to a larger diameter first portion (16) of the blow moulding spike (12) and the blank (10) is stretched so as to abut a smaller diameter second part (18) of the blow moulding spike (12), that the blow moulding spike (12) is displaced longitudinally into the neck moulding parts (42) of the blow mould (38), in order to calibrate the internal surface of the container neck, and that in the neck moulding parts (42) in a part (47) connected externally to the part for forming the container neck a predetermined quantity of oriented material is held so as to be ready for compressing into the neck region.

2. A method according to claim 1, characterised in that the blow moulding spike (12) is displaced after introducing the pressure medium and before inserting the tubular sleeve (24).

3. A method according to claim 1, characterised in that the introduction of the pressure medium and the displacement of the blow moulding spike (12) occur substantially simultaneously.

4. A method according to claim 1, characterised in that the material located in the outer end of the neck parts (42) is made to abut an extended part (52) by means of the blowing medium before the insertion of the tubular sleeve (24).

5. A method according to claim 1, characterised in that the formation of a smooth end face of the container neck and the separation of the excess material is associated with the compressing of the oriented material into the interspace between the neck moulding parts (42) and the blow moulding spike (12) by the tubular sleeve (24).

6. A method according to claim 1, characterised in that the devices (14) clamping one end part of the blank (10) on the larger diameter part (16) of the blow moulding spike (12) are opened perpendicular to the blow moulding spike axis before the insertion of the tubular sleeve (24).

7. Apparatus for carrying out the method according to any one of claims 1 to 6, with a blow moulding spike (12), which is surrounded by a tubular sleeve (24) displaceable in the direction of the blow moulding spike axis, clamping devices (14) which are arranged above neck parts (42) of moulding parts (38) and below the tubular sleeve (24) so as to be displaceable perpendicular to the blow moulding axis in the retracted position of the said sleeve, and with stretching means (32) displaceable in the axial direction of the blow moulding spike provided below the blow mould, characterised in that the blow moulding spike (12) has a larger diameter part (16) and a smaller diameter second part (18) and that a storage chamber (47) for a predetermined quantity of the oriented material required for forming the neck of the hollow body is connected to the part (44, 46) - of the neck parts (42) - which serves for forming the bottle neck.

8. Apparatus according to claim 7, characterised in that a second extended part (52) is connected to the storage chamber (47) in the neck parts (42).

9. Apparatus according to claim 7, characterised in that stripper plates (28) surrounding the tubular sleeve (24) are provided above the clamping means (14).

**Revendications**

1. Procédé de formage par soufflage d'un récipient creux fini, orienté biaxialement, à partir d'une paraison tubulaire (10) en matière plastique orientable qui a été chauffée à une température d'orientation correspondant au matériau, dans lequel une partie d'extrémité de la paraison (10) est bloquée par des dispositifs de serrage (14), la paraison est ensuite étirée le long de son axe longitudinal par des dispositifs d'étirage (32) avec une orientation axiale du matériau de la paraison et une contraction de la paraison jusqu'à ce qu'elle s'appuie contre un mandrin de soufflage, des parties de moule (38) dont l'empreinte (40) est adaptée au corps creux à souffler sont ensuite fermées, un fluide sous pression est acheminé par le mandrin de soufflage (12) dans la paraison étirée et un manchon tubulaire (24) entourant le mandrin de soufflage (12) est introduit dans des parties de formage de col (42) du moule de soufflage (38), afin de refouler de la matière orientée dans l'espace intermédiaire compris entre les parties de formage de col (42) du moule et le mandrin de soufflage (12), caractérisé en ce que la partie d'extrémité de la paraison (10) est bloquée sur première partie (16) de plus grand diamètre du mandrin de soufflage (12) et que la paraison (10) est étirée jusqu'à ce qu'elle s'appuie sur une deuxième partie (18) de plus petit diamètre du mandrin de soufflage (12), en ce que le mandrin de soufflage (12) est déplacé en direction longitudinale dans les parties de formage de col (42) du moule de soufflage (38), afin de calibrer la surface intérieure du col du récipient et en ce qu'une quantité prédéterminée de matière orientée destinée à être refoulée dans la zone du col, est maintenue disponible dans les parties de formage de col (42), dans une partie (47) se raccordant ver l'extérieur à la partie destinés au formage du col du récipient.

2. Procédé selon la revendication 1, caractérisé en ce que le déplacement du mandrin de soufflage (12) a lieu après l'introduction du fluide sous pression et avant l'introduction du manchon tubulaire (24).

3. Procédé selon la revendication 1, caractérisé en ce que l'introduction du fluide sous pression et le déplacement du mandrin de soufflage (12) ont lieu pour l'essentiel simultanément.

4. Procédé selon la revendication 1, caractérisé en ce qu'avant l'introduction du manchon tubulaire (24), la matière se trouvant dans l'extrémité extérieure des parties de formage de col (42) est amenée par le fluide de soufflage en appui contre une partie (52) élargie.

5. Procédé selon la revendication 1, caractérisé en ce que le refoulement par le manchon tubulaire (24) de la matière orientés dans l'espace intermédiaire compris entre les parties de formage de col (42) et le mandrin de soufflage (12) est combiné avec le formage d'une surface frontale lisse du col du récipient et la séparation de matière excédentaire.

6. Procédé selon la revendication 1, caractérisé en ce que les dispositifs (14) bloquant une partie d'extrémité de la paraison (10) sur la partie (16) de plus grand diamètre du mandrin de soufflage (12) sont ouverte perpendiculairement à l'axe du mandrin de soufflage avant l'introduction du manchon tubulaire (24).

7. Dispositif pour l'exécution du procédé selon l'une des revendications 1 à 6, comprenant un mandrin de soufflage (12) qui est entouré par un manchon tubulaire (24) déplaçable en direction de l'axe du mandrin de soufflage, des dispositifs de serrage (14) qui sont disposés au-dessus de parties de col (42) de parties de moule (38) et en dessous du manchon tubulaire (24), de manière à pouvoir, dans leur position de retrait, être déplacés perpendiculairement à l'axe du mandrin de soufflage, ainsi que des dispositifs d'étirage (32) prévus en dessous du moule de soufflage et mobiles en direction de l'axe du mandrin de soufflage, caractérisé en ce que le mandrin de soufflage (12) présente une partie (16) de plus grand diamètre et une partie (18) de plus petit diamètre et qu'un espace d'accumulation (47) pour une quantité prédéterminée de matière orientée nécessaire au formage du col du corps creux se raccorde à la partie (44, 46) des parties de col (42) destinés au formage du col de bouteille.

8. Dispositif selon la revendication 7, caractérisé en ce que dans les parties de col (42), un deuxième partie élargie (52) se raccorde à l'espace d'accumulation (47).

9. Dispositif selon la revendication 7, caractérisé en ce que des plaques d'éjection (28) entourant le manchon tubulaire (24) sont prévues au-dessus des dispositifs de serrage (14).

FIG. 1.

FIG. 2.

FIG. 3.

FIG. 4.

FIG. 5.

**0 062 144**

FIG. 6.

FIG. 7.